# EUROPEAN PATENT APPLICATION

(11) **EP 4 091 876 A1**
(43) Date of publication of application: **23.11.2022**
(21) Application number: 21175330.6
(22) Date of filing: 21.05.2021
(51) Int. Cl.: B60P 1/28

(54) **SUBFRAME FOR BOX FLOOR OF DUMP TRUCK AND BOX OF DUMP TRUCK**

(71) Applicant: Sandvik Mining and Construction Oy, 33330 Tampere (FI)
(72) Inventor: AHTIAINEN, Jouni, 33311 Tampere (FI); TUOMINEN, Jussi, 33311 Tampere (FI); VUOKILA, Marko, 33311 Tampere (FI); MAHMOUDI, Ahmad, SSAB, P1032, 61380 Oxelösund (SE); STENSSON, Mika, SSAB, P1032, 61380 Oxelösund (SE); KAN, Tommy, SSAB, P1032, 61380 Oxelösund (SE)
(74) Representative: Sandvik

(57) **Abstract**

A subframe (1) for a box floor of a dump truck, which subframe comprises a metal sheet (2) configured to be fastened to the box floor of the dump truck, wherein the metal sheet (2) comprises a first edge section (3) and a second edge section (4) arranged on opposite edges of the metal sheet (2), a central section (5) arranged in parallel plane with the edge sections (3, 4) and between the edge sections (3, 4), metal sheet comprising at least two elongated bending sections, wherein a first bending section (6) is arranged between the first edge section (3) and the central section (5), and a second bending section (7) is arranged between the second edge section (4) and the central section (5).

## Description

### TECHNICAL FIELD

The present invention relates to a subframe for a box floor of a dump truck and a box of a dump truck.

### BACKGROUND OF THE ART

Dump trucks, such as mining trucks and construction trucks, are used in mining and construction activities for loading, hauling, and unloading a variety of materials. Materials may include for example rocks, gravel, mineral ores, and stone blocks, which are heavy and hard objects. Thus, the box of the dump truck, and especially the floor of the box, is exposed to great impacts and forces, which may bend or even break the box. If bending or breaking occurs, it may break some other components under the box. In order to resist these impacts and forces, the floor of the box is typically reinforced with some kind of structure. For example, typical reinforcement structure is to fasten beams to the outer surface of the box floor. The beams are fastened to the box floor by welding the beams along their long sides. Such welding lines are prone to break when heavy objects, such as stone block and rocks, are dropped inside the box. To achieve sufficient reinforcement, the beams must be quite large and there must be several beams in the form of net. Thus, applying such beam reinforcement structure to the box increases the weight of the box. Also, welding such reinforcement beams to the box floor is very time consuming and expensive.

### OBJECTIVE OF THE INVENTION

The objective of the device is to alleviate the disadvantages mentioned above.

In particular, it is an objective of the present device to provide a better support structure for the box floor of a dump truck.

### SUMMARY

According to a first aspect, the present invention provides a subframe for a box floor of a dump truck, which subframe comprises a metal sheet configured to be fastened to the box floor of the dump truck, wherein the metal sheet comprises a first edge section and a second edge section arranged on opposite edges of the metal sheet, a central section arranged in parallel plane with the edge sections and between the edge sections. The metal sheet comprises at least two elongated bending sections, wherein a first bending section is arranged between the first edge section and the central section, and a second bending section is arranged between the second edge section and the central section.

The advantage of the subframe structure is that the elongated bending sections provide a more rugged and stiffer support structure in their longitudinal direction, i.e. in the longitudinal direction of the box in which the subframe is fastened, but allow greater bending and flexing of the subframe in their perpendicular direction, i.e. in the direction of the width of the box. At the same time, the structure is lighter than conventional reinforcement structures. Mentioned subframe structure provides a large membrane stress field underneath the box floor when it is fastened to it.

In an embodiment, the central section comprises first openings so that part of them are at the proximity of the first bending section and part of them are at the proximity of the second bending section. The first openings may be used for fastening the subframe to the box floor, for example by welds and preferably by plug welds, and it removes the critical long welding lines underneath the box floor. Fastening the subframe to the box floor at the proximity of the elongated bending sections allows the subframe to adapt to the transverse deformation of the box floor without breaking the welds.

In an embodiment, the first edge section comprises second openings at the proximity of the first bending section, and the second edge section comprises third openings at the proximity of the second bending section. The second and third openings may be used optionally or additionally with the first openings to fasten the subframe to the box floor, e.g. by welding through the openings for example using plug welds.

In an embodiment, a support beam is fastened to the metal sheet, wherein the support beam comprises a middle section arranged between the first bending section and the second bending section, a first end section, which is engaged with the first bending section, and a second end section, which is engaged with the second bending section. The advantage of the support beam is that it may be used for supporting a service bracket which keeps the box in lifted position if needed for example during maintenance.

In an embodiment, the first end section is fastened to the first bending section, and the second end section is fastened to the second bending section. By fastening the support beam to the bending sections of the metal sheet, the middle section may be floating, i.e. middle section is not fastened to the metal sheet at all, which would ruin the membrane mode of the metal sheet. Also, there is no need for transverse welding lines, which would be required if the middle section should be fastened to the metal sheet.

In an embodiment, the end sections of the support beam are fastened to the bending sections by welds.

In an embodiment, the first end section is adapted to bend over the first bending section, and the second end section is adapted to bend over the second bending section. By bending the end sections of the support beam over the bending sections of the metal sheet, and fastening the support beam to the metal sheet by the end sections, the possible impacts and forces to the support beam are directed to the end sections of the support beam and, thus, these forces are try to unbend the bended end sections of the support beam. The end sections of the support beam may be fastened to the outer side of the bending sections, i.e. on the side which is facing the edge sections of the metal sheet. Therefore, the forces to the support beam affect less to the fastening points, e.g. welds, so that they would easily break, which would be the case if the support beam is welded on the middle section to the central section of the metal sheet or even if the end sections are welded on top of the bending sections.

In an embodiment, the support beam is perpendicular to the first bending section and the second bending section.

In an embodiment, the middle section of the support beam comprises an indentation so that the upper surface of the middle section is closer to the metal sheet. The advantage of the indentation is that it creates some additional space below the box floor when the subframe is fastened to the box floor.

According to a second aspect, the invention provides a box of a dump truck, wherein the box comprises a box floor into which an above described subframe is fastened, wherein the subframe comprises a metal sheet having a first edge section and a second edge section arranged on opposite edges of the metal sheet, a central section arranged in parallel plane with the edge sections and between the edge sections. The subframe comprises at least two elongated bending sections, wherein a first bending section is arranged between the first edge section and the central section, and a second bending section is arranged between the second edge section and the central section.

In an embodiment, the central section comprises first openings so that part of them are at the proximity of the first bending section and part of them are at the proximity of the second bending section, and the subframe is fastened to the box floor by welds through the first openings.

In an embodiment, the first edge section comprises second openings at the proximity of the first bending section, and the second edge section comprises third openings at the proximity of the second bending section, and the subframe is fastened to the box floor by welds through the second openings and third openings.

In an embodiment, a support beam is fastened to the metal sheet, wherein the support beam comprises a middle section arranged between the first bending section and the second bending section, a first end section, which is engaged with the first bending section, and a second end section, which is engaged with the second bending section.

In an embodiment, the end sections of the support beam are fastened to the bending sections by welds.

According to a third aspect, the invention provides a dump truck comprising a box described above.

It is to be understood that the aspects and embodiments of the invention described above may be used in any combination with each other. Several of the aspects and embodiments may be combined together to form a further embodiment of the invention.

### BRIEF DESCRIPTION OF THE DRAWINGS

The accompanying drawings, which are included to provide a further understanding of the invention and constitute a part of this specification, illustrate embodiments of the invention and together with the description help to explain the principles of the invention. In the drawings:
**Fig. 1** shows a subframe for a box floor of a dump truck,
**Fig. 2** shows a subframe comprising an additional support beam,
**Fig. 3** shows a bottom of a box of a dump truck having a subframe fastened to the box floor, **and**
**Fig. 4** shows a bottom of a box of a dump truck having a subframe with a support beam fastened to the box floor.

### DETAILED DESCRIPTION

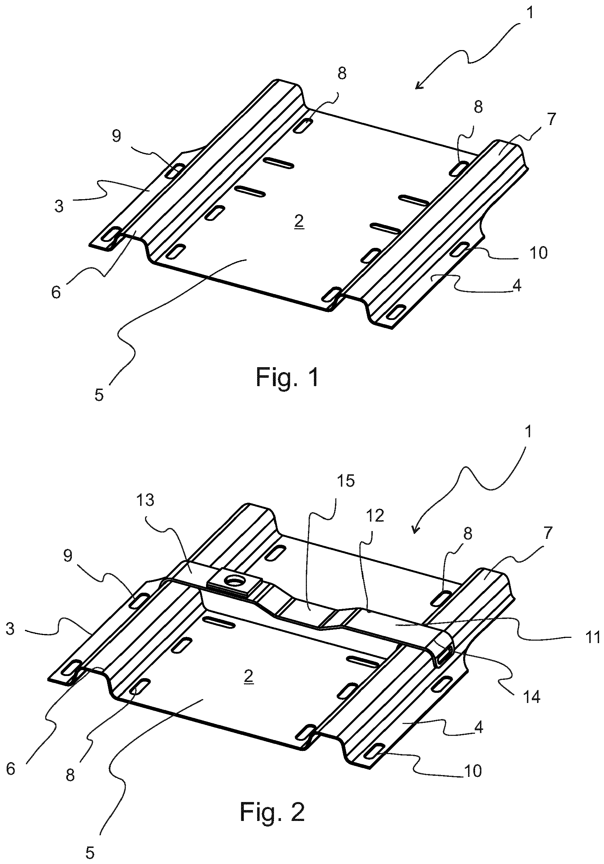

Figure 1 shows a subframe 1 for a box floor of a dump truck. The subframe comprises a metal sheet 2 configured to be fastened to the box floor of the dump truck, i.e. the outer surface/outside of the box floor. The metal sheet 2 comprises a first edge section 3 and a second edge section 4 arranged on opposite edges of the metal sheet, and a central section 5 arranged in parallel plane with the edge sections 3, 4 and between the edge sections 3, 4. As the central section 5 and the edge sections 3, 4 are in same plane, these parts may be engaged with the box floor, when the sub frame 1 is fastened to the box. Further, the metal sheet 2 comprises at least two elongated bending sections, wherein a first bending section 6 is arranged between the first edge section 3 and the central section 5. A second bending section 7 is arranged between the second edge section 4 and the central section 5.

The bending sections are elongated bulges in the metal sheet 2, which may be formed for example by bending and/or pressing. The bending sections may extend from one edge of the metal sheet 2 to the opposite edge of the metal sheet 2, i.e. each bending section forms a tunnel or a beam from one edge to the other edge. The shape of the bending section, i.e. the cross-section in radial direction, may have different forms. For example, the shape of the bending section may be curved, semicircular, polygonal (i.e. having at least two bended angles). The shape of the bending section may be fully curved, it may have only linear sections, or it may have linear and curved sections. The parts of the bending sections, which extends from the middle section and the end section, may be perpendicular to the metal sheet or inclined towards each other, i.e. the bending section narrows while extends outwards of the metal sheet.

The elongated bending sections 3, 4 may be parallel to each other.

The edge sections of the subframe are sections of the metal sheet which extends from one edge of the metal sheet towards an adjacent bending section, i.e. it is a planar section between one bending section and one edge of the metal sheet. The edge of each edge sections may be linear or it may have some shape or a cutting. In figure 1, each edge sections have a cutting and the edge sections does not fully extend from one edge to another edge along the adjacent bending section.

The central section 5 of the metal sheet is a section that is between the first bending section 6 and the second bending section 7. The central section 5 may be fully planar, or it may have some structure, e.g. protrusions and/or grooves. The central section 5 may comprise first openings 8 so that part of them are at the proximity of the first bending section 6 and part of them are at the proximity of the second bending section 7. The first openings 8 which are at the proximity of the first bending section 6 may be arranged linearly adjacent to the first bending section 6. The first openings 8 which are at the proximity of the second bending section 7 may be arranged linearly adjacent to the second bending section 7. The first openings 8 may have different shapes, e.g. the first openings 8 may be circular, rectangular, oval or elongated. Each of the first openings may have the same shape or they may have different shapes.

The first edge section 3 may comprise second openings 9 at the proximity of the first bending section 6, and the second edge section 4 may comprise third openings 10 at the proximity of the second bending section 7. The second openings 9 which are at the proximity of the first bending section 6 may be arranged linearly adjacent to the first bending section 6. The third openings 10 which are at the proximity of the second bending section 7 may be arranged linearly adjacent to the second bending section 7. The second openings 9 and/or the third openings 10 may have different shapes, e.g. circular, rectangular, oval or elongated. Each of the second openings 9 and/or the third openings 10 may have the same shape or they may have different shapes.

In figure 2, the subframe comprises an additional support beam 11 fastened to the metal sheet 2. The support beam 11 may be used as a support for maintenance bracket, when the box is lifted upwards and it must be secured in that position with the bracket. The support beam 11 comprises a middle section 12 arranged between two elongated support beams or sections, i.e. between the first bending section 6 and the second bending section 7. The middle section 12 may be engaged with the central section 5 or it may be arranged at proximity of the central section 5 so that it is not in connection with the central section 5. The support beam 11 comprises a first end section 13, which is engaged with the first bending section 6, and a second end section 14, which is engaged with the second bending section 7, i.e. the first and the second end sections 13, 14 are at the opposite ends of the support beam 11 and the middle section 12 is between the end sections 13, 14.

The support beam 11 may be made of two adjacent metal plates having a distance between them, and which are connected to each other by a third metal plate, which acts as the upper surface of the support beam, i.e. is the support surface which is parallel to the metal sheet and extends over the adjacent metal plates to form the end sections of the support beam. The two adjacent metal plates are perpendicular to the central section of the metal sheet. Optionally, the support beam 11 may be made of U-profile, i.e. metal plate which is bended in U-shape. The U-profile may be configured so that it opens towards the metal sheet, i.e. the third metal plate and the adjacent metal plates is uniform structure, or the U-profile may open outwards of the metal sheet and the third metal plate is fastened to the U-profile to act as the upper surface, which extends over the adjacent metal plates to form the end sections of the support beam. In case that the support beam is made of U-profile, which opens towards the metal sheet, the adjacent metal plates may have cuts so that the support beam adapts to the shapes of the bending sections of the metal sheet.

The first end section 13 and the second end section 14 may be thinner parts than the middle section 12. The end sections 13, 14 may be arranged adapt to the shape of the bending sections 6, 7, i.e. the first end section 13 is adapted to bend over the first bending section 6, and the second end section 17 is adapted to bend over the second bending section 7. The support beam 11 may be fastened to the metal sheet 2 so that the first end section 13 is fastened to the first bending section 6, and the second end section 14 is fastened to the second bending section 7. The end sections 13, 14 may be fastened to the bending sections 6, 7 at the sides which are facing the edge sections 3, 4 of the metal sheet 2. The end sections 13, 14 of the support beam 11 may be fastened to the bending sections 6, 7 by welds, e.g. the end sections may have openings and the support beam is fastened to the bending sections with plug welds through these openings.

The middle section 12 of the support beam 11 may comprise an indentation 15 so that the upper surface of the middle section 12 is closer to the metal sheet. The indentation 15 may be angular or it may be curved from the upper surface of the support beam towards the metal sheet 2.

The middle section 12 may be provided with a maintenance plate, which is fastened to the upper surface of the support beam 11, i.e. being parallel to the central section of the metal sheet. The maintenance plate is for supporting and holding the maintenance bracket in place during the maintenance work. The maintenance plate may be arranged in the middle of the middle section, or it may be arranged closer to one of the end sections.

The support beam 11 may be perpendicular to the first bending section (6) and the second bending section (7), i.e. the support beam is in same plane as the bending sections 6, 7 but in perpendicular direction.

Above mentioned support beam 11 may be used also with conventional reinforcement structures, e.g. with beam reinforcements, wherein the end sections would be engaged and fastened to the beams.

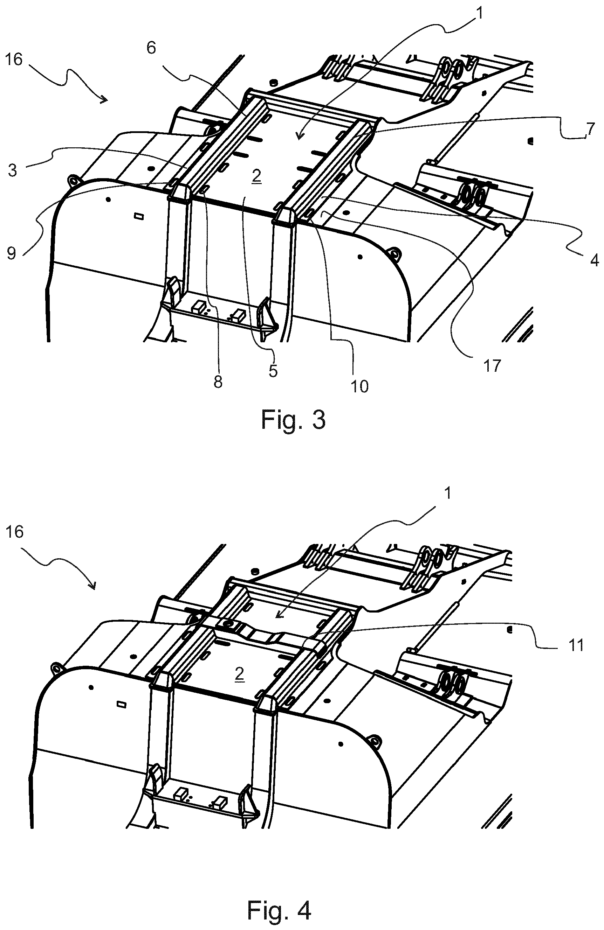

Figure 3 shows a bottom of a box 16 of a dump truck having a subframe fastened to the box floor 17. The subframe may be any kind of subframe 1 disclosed above. The subframe comprises a metal sheet 2 having a first edge section 3 and a second edge section 4 arranged on opposite edges of the metal sheet 2, and a central section 5 arranged in parallel plane with the edge sections 3, 4 and between the edge sections 3, 4. The metal sheet 2 comprises at least two elongated bending sections, wherein a first bending section 6 is arranged between the first edge section 3 and the central section 5, and a second bending section 7 is arranged between the second edge section 4 and the central section 5. As defined earlier, the elongated bending sections may be parallel to each other.

The central section 5 may comprise first openings 8 so that part of them are at the proximity of the first bending section 6 and part of them are at the proximity of the second bending section 7, and the subframe 1 is fastened to the box floor 16 by welds through the first openings 8. The welds, which are used for fastening the subframe 1 to the box floor 16, may be plug welds.

The first edge section 3 may comprise second openings 9 at the proximity of the first bending section 6, and the second edge section 4 may comprise third openings 10 at the proximity of the second bending section 7. Optionally or additionally, the subframe 1 may be fastened to the box floor 16 by welds through the second openings 9 and third openings 10.

Figure 4 shows a bottom of a box 16 of a dump truck having a subframe fastened to the box floor 17. The subframe corresponds to the subframe of figure 3 but a support beam 11 is placed on the subframe 1. The support beam 11 is fastened to the metal sheet 2, wherein the support beam 11 comprises a middle section 12, arranged between the first bending section 6, and the second bending section 7, and the middle section 12 may be engaged with the central section 5 or it may be arranged at a distance from the central section 5, i.e. it is not in connection with the central section 5. The support beam 11 further comprises a first end section 13, which is engaged with the first bending section 6, and a second end section 14, which is engaged with the second bending section 7. The end sections 13, 14 of the support beam 11 may be fastened to the bending sections 6, 7 by welds.

The subframe disclosed herein and the box comprising such subframe is especially suitable for a dump trucks, which are used for hauling, loading and unloading heavy objects such as rocks and stone blocks. Typical such dump trucks are mining and construction trucks.

Although the invention has been the described in conjunction with a certain type of device, it should be understood that the invention is not limited to any certain type of device. While the present inventions have been described in connection with a number of exemplary embodiments, and implementations, the present inventions are not so limited, but rather cover various modifications, and equivalent arrangements, which fall within the purview of prospective claims.

## Claims

1. A subframe (1) for a box floor of a dump truck, which subframe comprises a metal sheet (2) configured to be fastened to the box floor of the dump truck, wherein the metal sheet (2) comprises
- a first edge section (3) and a second edge section (4) arranged on opposite edges of the metal sheet (2),
- a central section (5) arranged in parallel plane with the edge sections (3, 4) and between the edge sections (3, 4),
**characterized by**
- at least two elongated bending sections, wherein a first bending section (6) is arranged between the first edge section (3) and the central section (5), and a second bending section (7) is arranged between the second edge section (4) and the central section (5) .

2. The subframe according to claim 1, wherein the central section (5) comprises first openings (8) so that part of them are at the proximity of the first bending section (6) and part of them are at the proximity of the second bending section (7).

3. The subframe according to claim 1 or 2, wherein the first edge section (3) comprises second openings (9) at the proximity of the first bending section (6), and the second edge section (4) comprises third openings (10) at the proximity of the second bending section (7) .

4. The subframe according to any of preceding claims, comprising a support beam (11) fastened to the metal sheet (2), wherein the support beam (11) comprises:
- a middle section (12) arranged between the first bending section (6) and the second bending section (7),
- a first end section (13), which is engaged with the first bending section (6), and
- a second end section (14), which is engaged with the second bending section (7).

5. The subframe according to claim 4, wherein the first end section (13) is fastened to the first bending section (6), and the second end section (14) is fastened to the second bending section (7).

6. The subframe according to claim 5, wherein the end sections (13, 14) of the support beam (11) are fastened to the bending sections (6, 7) by welds.

7. The subframe according to any of claims 4 to 6, wherein the first end section (13) is adapted to bend over the first bending section (6), and the second end section (14) is adapted to bend over the second bending section (7).

8. The subframe according to any of claims 4 to 7, wherein the support beam (11) is perpendicular to the first bending section (6) and the second bending section (7).

9. The subframe according to any of claims 4 to 7, wherein the middle section (12) of the support beam (11) comprises an indentation (15) so that the upper surface of the middle section (12) is closer to the metal sheet.

10. A box of a dump truck, wherein the box (16) comprises a box floor (17) into which a subframe (1) according to any of preceding claims is fastened, wherein the subframe comprises a metal sheet (2) having
- a first edge section (3) and a second edge section (4) arranged on opposite edges of the metal sheet (2),
- a central section (5) arranged in parallel plane with the edge sections (3, 4) and between the edge sections (3, 4),
**characterized by**
- at least two elongated bending sections, wherein a first bending section (6) is arranged between the first edge section (3) and the central section (5), and a second bending section (7) is arranged between the second edge section (4) and the central section (5) .

11. The box of a dump truck according to claim 10, wherein the central section (5) comprises first openings (8) so that part of them are at the proximity of the first bending section (6) and part of them are at the proximity of the second bending section (7), and the subframe (1) is fastened to the box floor (16) by welds through the first openings (8).

12. The box of a dump truck according to claim 10 or 11, wherein the first edge section (3) comprises second openings (9) at the proximity of the first bending section (6), and the second edge section (4) comprises third openings (10) at the proximity of the second bending section (7), and the subframe (1) is fastened to the box floor (16) by welds through the second openings (9) and third openings (10).

13. The box of a dump truck according to any of claims 10 to 12, comprising a support beam (11) fastened to the metal sheet (2), wherein the support beam (11) comprises:
- a middle section (12) arranged between the first bending section (6) and the second bending section (7),
- a first end section (13), which is engaged with the first bending section (6), and
- a second end section (14), which is engaged with the second bending section (7).

14. The box of a dump truck according to claim 13, wherein the end sections (13, 14) of the support beam (11) are fastened to the bending sections (6, 7) by welds.

15. A dump truck comprising a box (16) according to any of claims 10 to 14.
